# EUROPEAN PATENT APPLICATION

(11) **EP 1 073 227 A2**
(43) Date of publication of application: **31.01.2001**
(21) Application number: 00306407.8
(22) Date of filing: 27.07.2000
(51) Int. Cl.: H04J 14/02, H04B 10/145

(54) **Wavelength multiplexing transmitter**

(30) Priority: 27.07.1999 JP 21163499
(71) Applicant: NEC Corporation, Minato-ku, Tokyo 108-8001 (JP)
(72) Inventor: Sato, Yoshiro, c/o NEC Corporation, Tokyo 108-8001 (JP)
(74) Representative: Abnett, Richard Charles

(57) **Abstract**

A wavelength multiplexing transmitter includes optical amplifiers (1,2), an optical coupler (13) for wavelength multiplexing amplified signal light beams, and an optical brancher (14) which branches the wavelength multiplexed light beams. The transmitter further includes an optical signal monitoring circuit (20) which detects the output level of each signal light beam from the branched light beams, and a monitoring control circuit (22) which receives information on the output level of each signal light beam and controls the optical amplifiers (1,2) to bring the output level of the transmitter close to a preset value. The optical amplifiers (1,2) can amplify signal light beams with a specific wavelength.

## Description

### BACKGROUND OF THE INVENTION

### 1. Field of the Invention

The present invention relates to a wavelength multiplexing transmitter with optical amplifiers, and more particularly to a wavelength multiplexing transmitter that automatically controls the level of signal light beams to be multiplexed.

### 2. Description of the Related Prior Art

A wavelength multiplexing transmitter with optical amplifiers amplifying signal light beams comprises optical amplifiers which amplify a signal light beam with a specific wavelength, an optical coupler for wavelength multiplexing amplified signal light beams, and an optical brancher which branches wavelength multiplexed light beams. One branched light beam from the optical brancher is output of wavelength multiplexing transmitter, and the other is emitted as a monitoring light beam to the outside of the transmitter. The optical amplifiers comprise an amplifying circuit, an optical brancher, and an optical output monitoring circuit. In the optical amplifiers, the optical output monitoring circuit monitors signal light beams branched by the optical brancher and controls the optical amplifying circuit. An operator monitors a monitoring light beam and adjusts the optical output monitoring circuit in each optical amplifier to regulate each optical amplifier and output from one optical amplifier to another. However, adjustment in such a manner is troublesome and requires the operator to compute the transmitter output level by correcting monitoring light beam measurements.

### SUMMARY OF THE INVENTION

A wavelength multiplexing transmitter of the present invention comprises a plurality of optical amplifiers which amplify a signal light beam, an optical coupler wavelength multiplexing light beams output from the amplifiers, an optical brancher which branches light beams output from the optical coupler into first and second branched light beams, an optical signal monitoring circuit, and a monitoring control circuit. The optical signal monitoring circuit receives the second branched light beams and detects the output level of each signal light beam from the second branched light beams. The monitoring control circuit receives information on the output level of each signal light beam from the optical signal monitoring circuit and controls the optical amplifiers to bring the output level of the first branched light beams close to a preset value. The optical amplifiers can comprise an optical output monitoring circuit which informs the monitoring control circuit of their preset level. The monitoring control circuit can receive information from the optical signal monitoring circuit and information on the output level of the amplifiers and can control the optical amplifiers to bring the output level of the first branched light beams close to a preset value. The monitoring control circuit can bring the level of each signal light beam constituting the first branched light beams close to its preset value. The optical signal monitoring circuit converts the detected output level of each signal light beam into an electrical signal and sends the signal to the monitoring control circuit. The signal can be corrected so that its level corresponds to that of the signal light beam constituting the first branched light beams. Another optical brancher which branches an external monitoring output light beams can be disposed between the optical brancher and the optical signal monitoring circuit.

Another wavelength multiplexing transmitter of the present invention comprises a plurality of first optical amplifiers which amplify signal light beam, an optical coupler for wavelength multiplexing light beams output from the first optical amplifiers, a second optical amplifier which amplifies light beams output from the optical coupler, an optical brancher which branches the light beams output from the second optical amplifier into first and second light beams, an optical signal monitoring circuit, and a monitoring control circuit. The optical signal monitoring circuit receives the second branched light beams and detects the output level of each signal light beam from the second branched light beams. The monitoring control circuit receives information on the output level of each signal light beam from the optical signal monitoring circuit and controls the first optical amplifiers to bring the output level of the first branched light beams close to a preset value. The monitoring control circuit receives information from the optical signal monitoring circuit and information on the output level of the first and second amplifiers and controls the first optical amplifiers and/or second optical amplifier to bring the output level of the first branched light beams close to a preset value. The wavelength multiplexing transmitters can automatically control the output level of each signal light beam.

### BRIEF DESCRIPTION OF THE DRAWINGS

The above and other objects, features, and advantages of the present invention will become apparent from the following detailed description when taken with the accompanying drawings in which:
FIG. 1 is a block diagram of a previously proposed wavelength multiplexing transmitter;
FIGS. 2A and 2B are a block diagram of an embodiment of a wavelength multiplexing transmitter of the present invention;
FIG. 3 is a block diagram of another embodiment of a wavelength multiplexing transmitter of the present invention;
FIG. 4 is a block diagram of an embodiment of an optical amplifier;
FIG. 5 is a block diagram of another embodiment of the optical amplifier;
FIG. 6 is a block diagram of an embodiment of an optical detecting circuit; and
FIG. 7 is a block diagram of another embodiment of the optical detecting circuit.

### DETAILED DESCRIPTION OH THE PREFERRED EMBODIMENTS

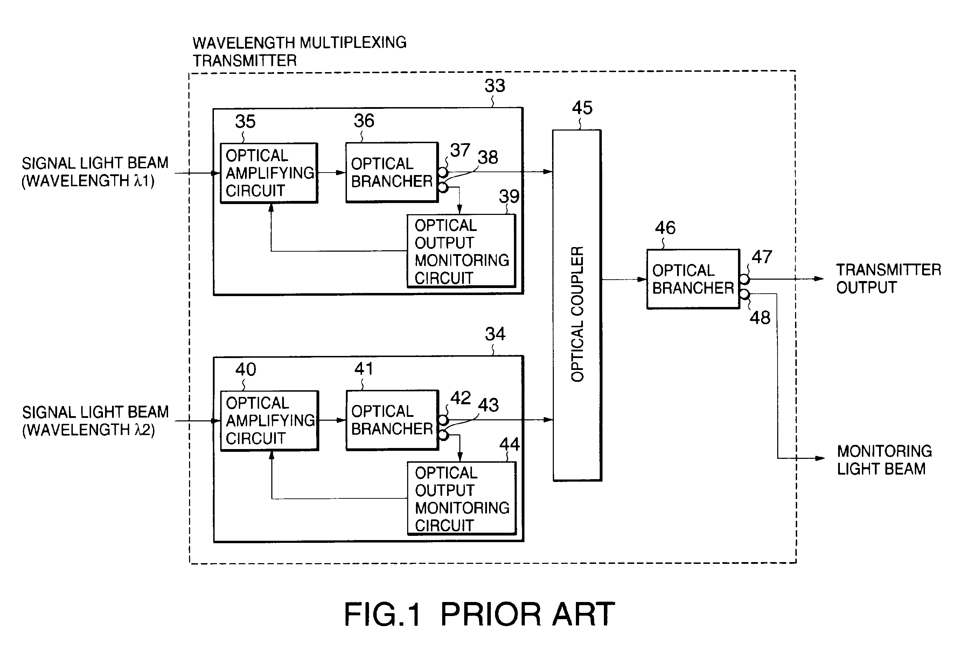

Referring to FIG. 1, a previously proposed wavelength multiplexing transmitter comprises optical amplifiers 33 and 34 which amplify signal light beam with a certain wavelength, an optical coupler 45 for wavelength multiplexing an amplified signal light beam, and an optical brancher 46 which branches wavelength multiplexed light beams. In the optical amplifier 33, an optical amplifying circuit 35 amplifies a signal light beam, and the optical brancher 36 branches the amplified signal light beam. An optical output monitoring circuit 39 receives a branched light beam 38 and controls the optical amplifying circuit 35. The optical amplifier 34, which has the same structure, operates in the same way. The optical coupler 45 for wavelength multiplexing light beams amplified by the optical amplifiers 33 and 34. The optical brancher 46 branches amplified light beams into two branched light beams 47 and 48. The branched light beam 47 is output from the wavelength multiplexing transmitter, and the branched light beams 48 is monitoring light beams. An operator introduces the monitoring light beam into a measuring instrument to manually adjust the optical output monitoring circuits 39 and 44 in the optical amplifiers 33 and 34 based on the measurements.

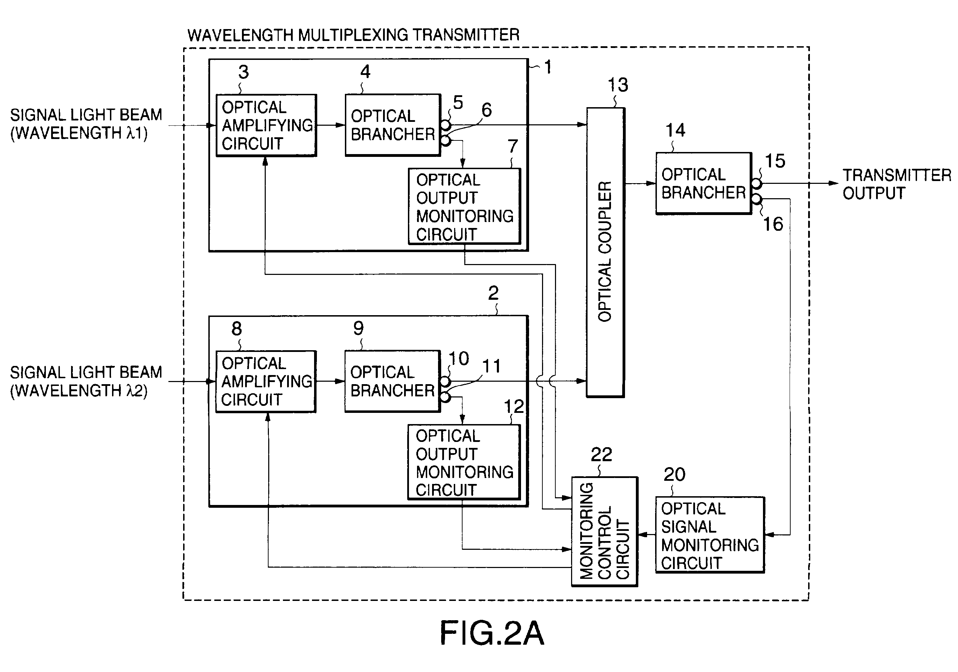

Referring to FIG. 2A, a first embodiment of the present invention is a wavelength multiplexing transmitter for wavelength multiplexing signal light beams with wavelengths λ1 and λ2. The transmitter comprises optical amplifiers 1 and 2 which amplify signal light beam, an optical coupler 13 for wavelength multiplexing two amplified signal light beams, an optical brancher 14, an optical signal monitoring circuit 20, and a monitoring control circuit 22. The optical amplifier 1, a constant-output control type amplifier, comprises an optical amplifying circuit 3, an optical brancher 4, and an optical output monitoring circuit 7. The optical amplifying circuit 3 amplifies a signal light beam with a wavelength λ1 until a predetermined output level is reached. The optical brancher 4 branches the amplified signal light beam into an optical amplifier output light beam 5 and a monitoring light beam 6. The optical amplifier 2 has the same structure and operates in the same way. The optical output monitoring circuit 7 measures the output level of the monitoring light beam 6, calculates the output level of the optical amplifier output light beam 5 from the measured output level, and sends the resulting level to a monitoring control circuit 22. The optical brancher 14 outputs as transmitter output 15 most of light beams output from the optical coupler 13 and outputs the remainder of the light beams as branched light beams 16 to the optical signal monitoring circuit 20. The optical signal monitoring circuit 20 measures the level of each of the branched light beams, calculates the output level of each light beam constituting the transmitter output 15 based on the measurements, and sends the resulting output levels to the monitoring control circuit 22. The optical signal monitoring circuit 20 can also send the level of each of the branched light beams directly to the monitoring control circuit 22. A target output level is input beforehand to the monitoring control circuit 22 for each signal light beam constituting the transmitter output. The monitoring control circuit 22 receives information on the output level of a signal light beam from the optical amplifiers 1 and 2 and optical signal monitoring circuit 20 and controls the optical amplifying circuits 3 and 8 in the optical amplifiers 1 and 2 so that the output level of each signal light beam constituting the transmitter output 15 approaches its preset target value. Thus the output level of each signal light beam constituting the transmitter output 15 is automatically controlled to approach the target value.

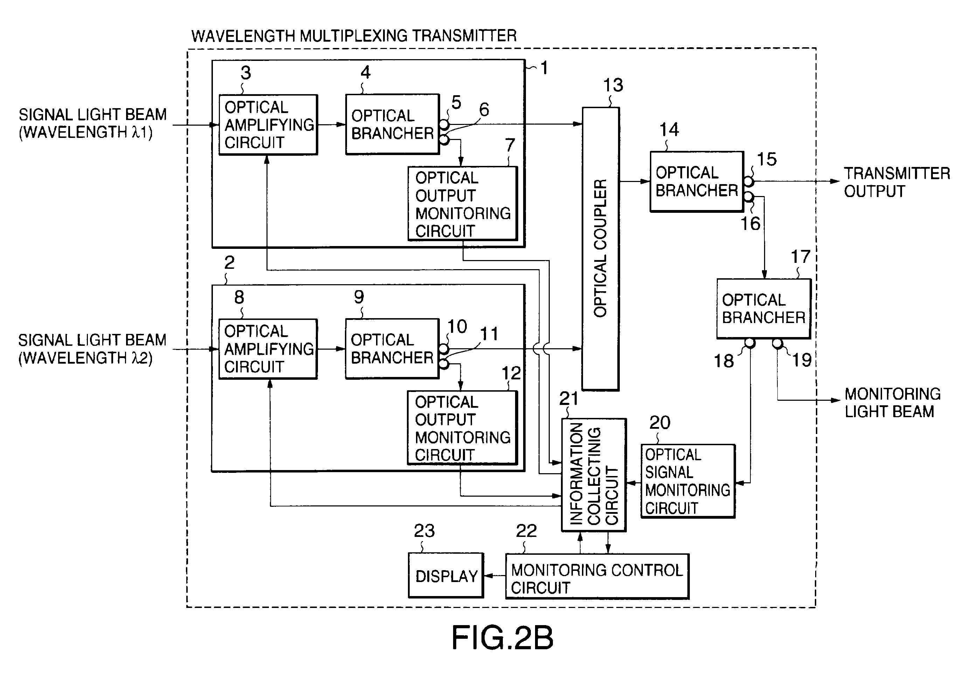

FIG. 2B shows a second embodiment of a wavelength multiplexing transmitter of the present invention. In addition to the elements of the first embodiment, the second embodiment also has between the optical brancher 14 and the optical signal monitoring circuit 20 an optical brancher 17 for branching a monitoring light beam 19. Thus the transmitter in FIG. 2B allows the operator to make manual control. The monitoring control circuit 22 may have an information collecting circuit 21 which exchanges information to the optical amplifiers 1 and 2 and optical signal monitoring circuit 20 and have a display 23 which displays measurements, the measured level of a light beam constituting the transmitter output, and its target value. The operator can easily know control condition from the display.

An example of operation of the wavelength multiplexing transmitter in FIG. 2B will be described below. The target output level of two signal light beams (wavelengths λ1 and λ2) constituting the transmitter output 15 is input to the monitoring control circuit 22. For example, the output level is assumed to be 0 dBm. Signal light beams with wavelengths λ1 and λ2 are input to the optical amplifiers 1 and 2, respectively. An output level of +10 dBm is initially set on the optical amplifiers 1 and 2. Because the two optical amplifiers have the same structure, only the amplifier 1 will be described below. If the insertion loss caused by the optical brancher 4 is 1 dBm on the side of optical amplifier output 5 and 11 dBm for the side of a monitoring light beam 6, the output level of the monitoring light beam is 0 dBm. The optical output monitoring circuit 7 corrects the insertion loss difference (10 dB) between the side of the optical amplifier output 5 and that of the monitoring light beam 6 and informs the information collecting circuit 21 that the output level of the optical amplifier 1 is +10 dBm. The optical coupler 13 wavelength multiplexes output light beams from the optical amplifiers 1 and 2, and the brancher 11 branches the resulting light beams into the transmitter output 15 and a monitoring light beam 16. The insertion loss is assumed to be 5 dB for each path in the optical coupler 13, 1 dB for the transmitter output 15 side of the optical brancher 14, 11 dB for the side of the monitoring light beam 16, 3 dB for the branched light beam 18 side of the optical brancher 17, and 3 dB for the side of an external monitoring light beam 19. In this case, the output level of each light beam constituting the branched light beam 18 is -9 dBm. The optical signal beam monitoring circuit 20 corrects the insertion loss difference (13 dB) between the side of the transmitter output 15 and that of the branched light beam 18 and informs the information collecting circuit 21 that the output level of signal light beams with the wavelengths λ1 and λ2 at the transmitter output 15 is +4 dBm. The information collecting circuit 21 sends measurement information received from the optical amplifiers 1 and 2 and optical signal monitoring circuit 20 to the monitoring control circuit 22. The monitoring control circuit 22 sends the received information to a display 23. The display 23 displays the information and a preset target output level value. The monitoring control circuit 22 recognizes that the measurement of the transmitter output 15 is +4 dBm for each signal light beam and that the preset target value is 0 dBm. Thus the circuit 22 sends to the information collecting circuit 21 such control information that the output level of the amplifiers 1 and 2 is reduced by 4 dB. The circuit 21 sends the control information to the optical amplifying circuits 3 and 8 in the optical amplifiers 1 and 2. The control information is effective until the optical amplifiers 1 and 2 send control completion information. In response to the control information, the optical amplifying circuits 3 and 8 change the output level of the optical amplifiers 1 and 2 from +10 dBm to +6 dBm. After this control is completed, the optical output monitoring circuits 7 and 12 send control completion information to the information collecting circuit 21. Then, if the measurement of the transmitter output 15 satisfies a condition of: its target value -0.2 dBm < the measurement < its target value +0.2 dBm, output level setting is considered to have been completed. However, if the measurement is outside the range, the above-described control is repeated. During the above-described operation, the optical signal monitoring circuit 20 computes the level of signal light beams constituting the transmitter output 15 from the branched light beams 18 received and sends the resulting value to the information collecting circuit 21. This method is helpful in displaying the level of a signal light beam on the display. However, to automatically control the wavelength multiplexing transmitter, the level of each signal light beam constituting the branched light beams 18 may be transmitted directly to the information collecting circuit 21.

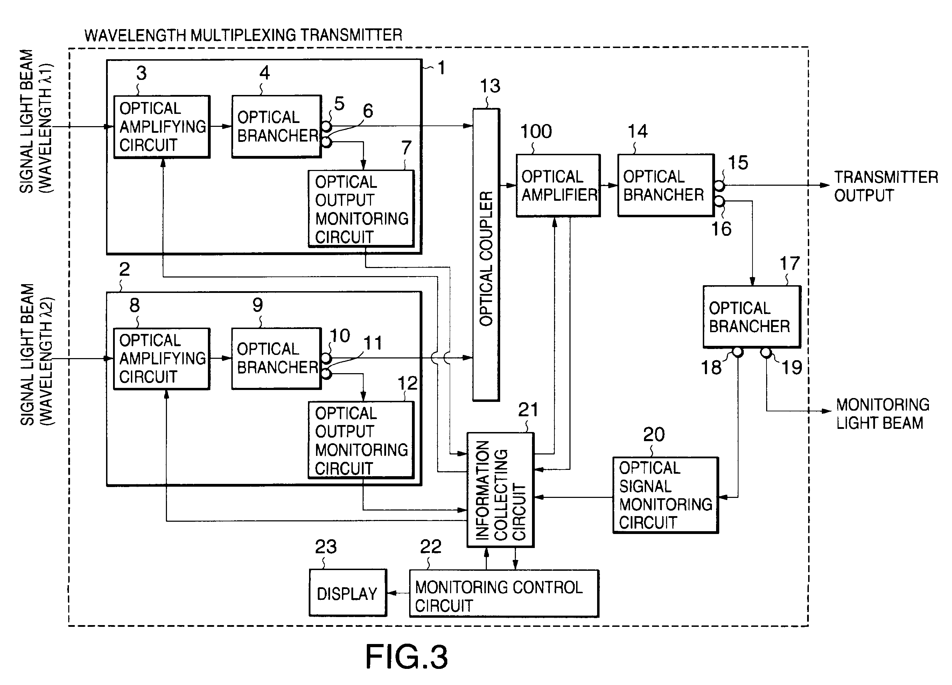

FIG. 3 shows a third embodiment of the present invention. In the wavelength multiplexing transmitter, an optical amplifier 100 is disposed between the optical coupler 13 and the optical brancher 14. The optical amplifier 100 has the same structure as the optical amplifiers 1 and 2. The optical amplifier 100 informs the information collecting circuit 21 of the output level and receives output level control information from the information collecting circuit 21 to change the output level of the multiplexed signal light beams at a time. In the embodiment, a target level of the transmitter output 15 can be set on the monitoring control circuit 22. The information collecting circuit 21 receives information from the optical amplifier 100 and optical signal monitoring circuit 20 and sends information for controlling the output level of the optical amplifier 100 to the optical amplifier 100. In the wavelength multiplexing transmitter in FIG. 3, a target output level of each signal light beam constituting the transmitter output 15 and a target level of the entire transmitter output 15 are input to the monitoring control circuit 22. Based on these input values (target values), the circuit 22 sends control information through the information collecting circuit 21 to the amplifiers 1, 2, and 100. The wavelength multiplexing transmitter helps control the level of the entire transmitter output.

A wavelength multiplexing transmitter of the present invention allows different target output levels of a signal light beam to be set. Using a wavelength multiplexing transmitter of the present invention, three or more signal light beams which differ in wavelength can be subjected to wavelength multiplexing. When one optical amplifier only amplifies a signal light beam with a specific wavelength, the number of optical amplifiers must be increased according to the number of signal light beams to be subjected to wavelength multiplexing. However, one optical amplifier can amplify a plurality of optical light beams which differ in wavelength. In this case, these optical light beams are controlled in the same way.

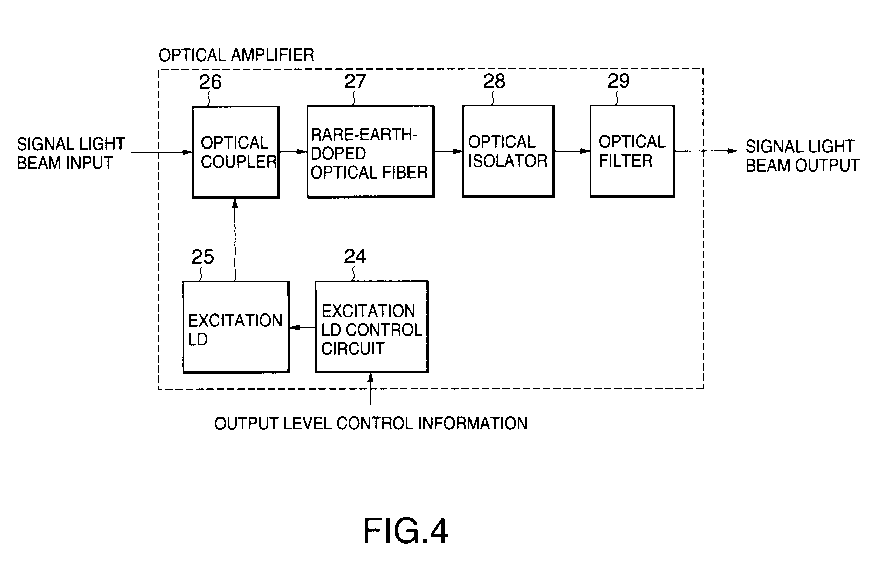

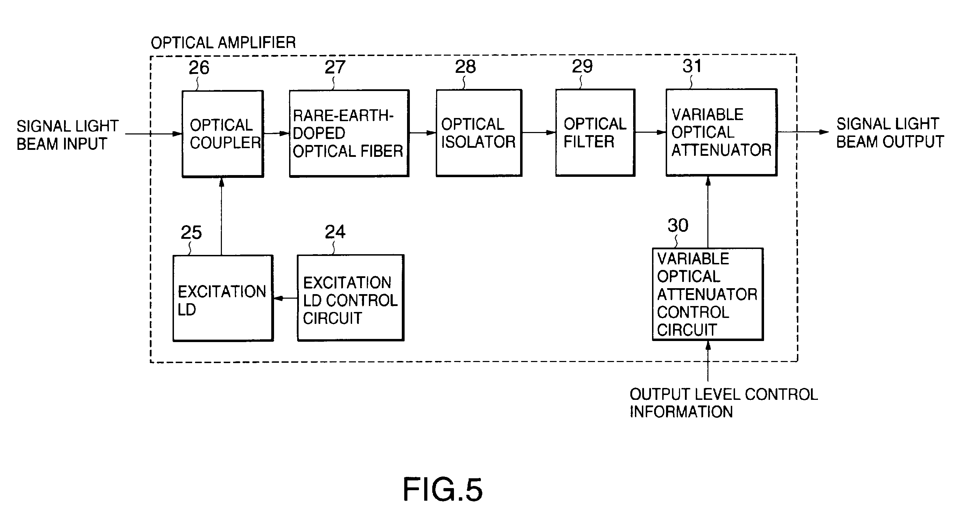

Referring to FIG. 4, the optical amplifying circuits 3 and 8 of a wavelength multiplexing transmitter comprise an excitation LD control circuit 24, an excitation LD 25, an optical coupler 26, a rare-earth-doped optical fiber 27, an optical isolator 28, and an optical filter 29. The excitation LD control circuit 24 receives output level control information from the information collecting circuit 21 and controls current driving the excitation LD 25. The excitation LD 25 outputs an excitation light beam according to the driving current. The optical coupler 26 couples a signal light beam and the excitation light beam and outputs the resulting beam. The rare-earth-doped fiber 27 absorbs the excitation light beam and amplifies the signal light beam. The optical isolator 28 prevents the resulting light beam from reflecting and reentering the rare-earth-doped fiber 27. The optical filter 29 removes spontaneous emission light to transmit the signal light beam only. Referring to FIG. 5, another optical amplifying circuit comprises the components in FIG. 4, a variable optical attenuator 31 which controls the level of an output light beam, and a control circuit 30 which controls the variable optical attenuator based on output level information from the information collecting circuit 21. For the above described optical amplifying circuit, forward, backward, and bidirectional excitation methods are available to optically excite the rare-earth-doped fiber.

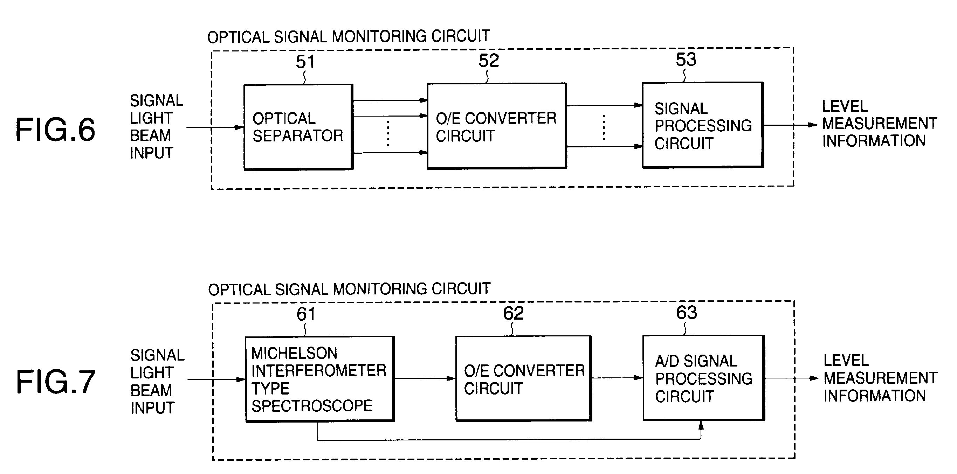

Referring to FIG. 6, an optical signal monitoring circuit 20 comprises an optical wave separator 51 which separates branched light beams for each wavelength, an O/E converting circuit 52, and a signal processing circuit 53 which corrects the level of an electrical signal corresponding to a wavelength so that the level is equal to that of transmitter output. For example, a waveguide device, such as an arrayed waveguide grating, and a device consisting of a fiber Bragg diffraction grating and an optical circulator can be used as the optical separator. Referring to FIG. 7, another optical signal monitoring circuit comprises a Michelson interferometer type spectroscope 61 using a movable mirror which causes branched light beams to interfere with each other. An O/E converting circuit 62 performs reverse Fourier transform of the original spectrum of a signal light beam constituting transmitter output to output an electrical signal corresponding to optical output. An A/D signal processing circuit 63 converts the electrical signal to wavelength information, using a scanning signal from the movable mirror.

A wavelength multiplexing transmitter of the present type can automatically control the output level of a signal light beam constituting transmitter output by monitoring the output level of optical amplifiers and that of the signal light beam. Because the output level is automatically controlled without using an external measuring instrument, the output level of an optical amplifier and that of individual signal light beams constituting transmitter output can always be checked even when the transmitter is in service.

While the present invention has been described in connection with certain preferred embodiments, it is to be understood that the subject matter encompassed by the present invention is not limited to those specific embodiments. On the contrary, it is intended to include all alternatives, modifications, and equivalents as can be included within the scope of the following claims.

## Claims

1. A wavelength multiplexing transmitter for wavelength multiplexing signal light beams with different wavelengths, comprising:
a plurality of optical amplifiers (1,2) which amplify the signal light beam;
an optical coupler (13) for wavelength multiplexing light beams output from the optical amplifiers; and
an optical brancher (14) which branches light beams output from the optical coupler into first and second branched light beams;
characterized by:
an optical signal monitoring circuit (20) which receives the second branched light beams and detects output level of each signal light beam constituting the second branched light beams; and
a monitoring control circuit (22) which receives information on the output level of each signal light beam from the optical signal monitoring circuit and controls the optical amplifiers to bring the output level of said first branched light beams close to a preset value.

2. A wavelength multiplexing transmitter for wavelength multiplexing signal light beams with different wavelengths, comprising:
a plurality of first optical amplifiers (1,2) which amplify the signal light beam;
an optical wave coupler (13) for wavelength multiplexing light beams output from the first optical amplifiers;
a second optical amplifier (100) which amplifies light beams output from the optical coupler;
an optical brancher (14) which branches light beams output from the second optical amplifier into first and second branched light beams;
an optical signal monitoring circuit (20) which receives the second branched light beams and detects the output level of each signal light beam constituting the second branched light beams; and
a monitoring control circuit (22) which receives information on the output level of each signal light beam from the optical signal monitoring circuit and controls the first optical amplifiers to bring the output level of said first branched light beams close to a preset value.

3. The wavelength multiplexing transmitter according to claim 1 or 2, wherein each of the (first) optical amplifiers (1,2) amplifies a signal light beam with one specific wavelength.

4. The wavelength multiplexing transmitter according to claim 1, 2 or 3, wherein:
the (first) optical amplifiers (1,2) have an optical output monitoring circuit (7,12) which informs the monitoring control circuit of their output level; and
the monitoring control circuit (22) receives information from said optical signal monitoring circuit and optical amplifier output level information and controls the (first) optical amplifiers to bring the output level of said first branched light beam close to a preset value.

5. The wavelength multiplexing transmitter according to any preceding claim, wherein the monitoring control circuit (22) brings the level of each signal light beam constituting said first branched light beam close to a value preset for each signal light beam.

6. The wavelength multiplexing transmitter according to any preceding claim, wherein the optical signal monitoring circuit (20) converts the detected output level of each signal light beam to an electrical signal and sends the resulting signal to the monitoring control circuit.

7. The wavelength multiplexing transmitter according to claim 6, wherein said electrical signal is corrected so that its level corresponds to the level of the signal light beam constituting the first branched light beams.

8. The wavelength multiplexing transmitter according to any preceding claim, wherein said first branched light beam (15) is output from the wavelength multiplexing transmitter.

9. The wavelength multiplexing transmitter according to any preceding claim, wherein another optical brancher (17) which branches an external monitoring output light beam is provided between said optical brancher (14) and the optical signal monitoring circuit (20).

10. The wavelength multiplexing transmitter according to any preceding claim, wherein the optical signal monitoring circuit (20) comprises an optical separator (51) which separates signal light beams for each wavelength, an optoelectrical converting circuit (52), and a signal processing circuit (53) which adjusts an electrical signal level.

11. The wavelength multiplexing transmitter according to any preceding claim, wherein the optical signal monitoring circuit (20) comprises a Michelson interferometer type spectroscope (61), an optoelectrical converting circuit (62), and an A/D signal processing circuit (63).

12. The wavelength multiplexing transmitter according to any preceding claim, wherein the monitoring control circuit (22) is provided with an information collecting circuit (21) which transmits and receives information, and a display (23) which displays information, and on the monitoring control circuit (22) a transmitter output level is set and which controls an optical amplifier.

13. The wavelength multiplexing transmitter according to any preceding claim, wherein the monitoring control circuit (22) controls an optical amplifier excitation light beam.

14. The wavelength multiplexing transmitter according to any preceding claim, wherein the (first) optical amplifiers (1,2) comprise a variable optical attenuator and wherein the monitoring control circuit controls the variable optical attenuator.
